# FASCICULE DE BREVET EUROPEEN

(11) **EP 3 053 635 B1**
(45) Date de publication et mention de la délivrance du brevet: **12.06.2019**
(21) Numéro de dépôt: 16154326.9
(22) Date de dépôt: 04.02.2016
(51) Int. Cl.: A63F 13/24

(54) **DISPOSITIF D'ENTRÉE DE COMMANDE POUR MANETTE DE JEU, ET MANETTE DE JEU MUNIE D'UN TEL DISPOSITIF**
STEUERBEFEHL-EINGABEVORRICHTUNG FÜR JOYSTICK, UND MIT EINER SOLCHEN VORRICHTUNG AUSGESTATTETER JOYSTICK
COMMAND INPUT DEVICE FOR JOYSTICK, AND JOYSTICK PROVIDED WITH SUCH A DEVICE

(30) Priorité: 05.02.2015 FR 1550906
(43) Date de publication de la demande: 10.08.2016
(73) Titulaire: Playrapid, 13210 Saint Remy de Provence (FR)
(72) Inventeur: RUBIO, Damien, 13210 SAINT REMY DE PROVENCE (FR)
(74) Mandataire: IPAZ

(56) Documents cités:
- WO-A1-2014/187923
- "Our Latest Revision of Paddles", , 20 février 2014 (2014-02-20), XP055233264, Extrait de l'Internet: URL:https://thecontrollershop.com/article. php?article=16 [extrait le 2015-12-03]

## Description

La présente invention concerne un dispositif d'entrée de commande pour manette de jeu. Elle concerne également une manette de jeu munie d'un tel bouton de commande.

Le domaine de l'invention est le domaine des dispositifs d'entrée de commande pour une console de jeu ou un ordinateur, telle qu'une manette.

### Etat de la technique

La plupart des jeux électroniques/informatiques sont commandés par des dispositifs d'entrée de commande, également appelés manettes de jeu.

Les jeux électroniques sont de plus en plus sophistiqués et permettent d'entrer de plus en plus de commandes au travers de boutons de commandes. L'augmentation du nombre de commandes s'accompagne de l'augmentation de boutons de commandes sur les dispositifs d'entrée de commande, telles que les manettes.

Parallèlement, les acteurs de ce domaine tentent de proposer des dispositifs d'entrée de commande permettant aux utilisateurs d'entrer des commandes de manière plus ergonomique et plus rapide.

Par exemple, le brevet américain publié sous le numéro US 8 641 525 B2 propose un dispositif d'entrée de commande comportant des palettes de commandes disposées sur une face arrière du dispositif de commande et permettant à un utilisateur d'entrer des commandes en utilisant les doigts d'une main autre que le pouce.

"Our Latest Revision of Paddles", 20 février 2014, extrait de l'Internet: https:// thecontrollershop.com/article.php?article=16 et document WO 2014/187923 A1 divulguent une manette de jeu avec une palette fixée sur la face arrière.

Chaque palette arrière décrite dans cette demande correspond à une lame en plastique et flexible. Chaque palette comporte une extrémité fixée sur la manette du côté de la face supérieure, se prolonge vers la face inférieure et comporte une extrémité libre du côté de ladite face inférieure, c'est-à-dire plus près de l'auriculaire que l'index. Par conséquent, en fonction du doigt utilisé (autre que le pouce), il est plus ou moins difficile, voire impossible d'entrer des commandes avec ces palettes.

De plus, chaque palette présente une forme générale plate et est disposée parallèle à la face arrière de la manette. Ainsi, l'utilisateur souhaitant entrer une commande doit appliquer une pression sur la palette suivant une direction verticale à la manette, et en particulier à la face arrière de la manette. Or, l'application d'une pression perpendiculaire à la face arrière de la manette par un doigt d'une main tenant la manette n'est pas ergonomique.

Un but de la présente invention est de remédier aux inconvénients précités.

Un autre but de l'invention est de proposer un dispositif d'entrée de commande pour une manette de jeu plus ergonomique pour entrer de commande, lorsque ladite manette est tenue par la main.

Encore un autre but de l'invention est de proposer un dispositif d'entrée de commande pour une manette de jeu offrant une plus grande facilité pour entrer des commandes quel que soit le doigt de la main utilisé, autre que le pouce.

### Exposé de l'invention

L'invention propose d'atteindre au moins l'un des buts précités par un dispositif d'entrée de commande pour manette de jeu, prévu pour être disposé sur une face arrière de ladite manette de jeu, ledit dispositif comprenant au moins un actionneur, dit palette, comprenant :
- une partie, dite de fixation, prévue pour être fixée sur ladite face arrière, et
- une partie, dite de manipulation, présentant une surface d'appui prévue pour être manipulée par au moins un doigt d'un utilisateur autre que le pouce ;
ladite palette présente une géométrie telle que, lorsqu'elle est fixée sur ladite face arrière ladite partie de manipulation est positionnée entre ladite partie de fixation et un bord latéral de ladite manette ;
caractérisé en ce que ladite palette est recourbée entre ladite partie de fixation et ladite partie de manipulation de sorte que, lorsqu'elle est fixée sur ladite face arrière :
- ladite palette s'éloigne de ladite face arrière du côté de ladite partie manipulation ; et
- ladite partie de manipulation forme un angle non nul par rapport à ladite face arrière.

Le dispositif selon l'invention, permet d'entrer des commandes de manière plus ergonomique. En effet, la partie de manipulation étant recourbée et s'éloignant de la face arrière, elle forme un angle non nul par rapport à la partie de fixation et/ou la face arrière de la manette. Par conséquent, et à la différence des dispositifs de l'état de la technique, une commande peut être entrée en effectuant un appui suivant une direction non perpendiculaire à la face arrière de la manette, ce qui correspond au mouvement naturel de rotation ou de serrage d'un doigt d'une main tenant la manette sur un bord ou une face latérale de la manette dans la paume. Par ailleurs, un tel mouvement étant plus naturel l'entrée d'une commande avec le dispositif selon l'invention est plus rapide et nécessite moins d'effort de la part de l'utilisateur.

Le dispositif selon l'invention permet d'entrer des commandes de manière plus facile, et en fournissant à peu près le même effort d'appui, quel que soit le doigt de la main utilisé. En effet, la partie de manipulation étant située entre la partie de fixation et un bord (ou une face) latéral(e) tenu(e) par une main, l'entrée d'une commande est réalisée par rotation/flexion de la palette autour d'un axe rejoignant une face supérieure et une face inférieure de la manette, c'est-à-dire un axe sensiblement parallèle à l'axe de préhension de la manette par la main. Contrairement aux dispositifs de l'état de la technique, l'axe de rotation/flexion de l'actionneur est donc distant de chacun des doigts (autre que le pouce) de l'utilisateur, chacun de ces doigts pouvant alors entrer une commande en effectuant à peu près le même effort d'appui.

Dans la présente demande, on entend par :
- « face avant », la face de la manette dirigée vers l'utilisateur lors de l'utilisation de la manette,
- « face arrière », la face de la manette dirigée à l'opposé de l'utilisateur lors de l'utilisation de la manette,
- « face supérieure » ou « bord supérieur », la face ou le bord de la manette se trouvant entre la face avant et la face arrière, et dirigé vers le haut lors de l'utilisation de la manette,
- « face inférieure » ou « bord inférieur », la face ou le bord de la manette se trouvant entre la face avant et la face arrière, et dirigé vers le bas lors de l'utilisation de la manette,
- « face latérale » ou « bord latéral », la face ou le bord de la manette se trouvant entre la face avant et la face arrière, et se trouvant un côté de la manette lors de l'utilisation de la manette et servant à la tenue de la manette par serrage dans la paume.

Avantageusement, le dispositif selon l'invention peut comprendre une pluralité de palettes, telle que celle décrite plus haut.

Par exemple, le dispositif selon l'invention peut comprendre une palette prévue pour être fixée du côté de chacun des bords latéraux de la manette.

Alternativement ou en plus, le dispositif selon l'invention peut comprendre, pour au moins un, en particulier chaque, bord de la manette, plusieurs palettes prévues pour être fixées du côté dudit bord de la manette et manipulées par les doigts de la main tenant ledit bord de la manette.

Dans ce cas, au moins deux palettes disposées du côté d'un même bord peuvent être superposées suivant une direction perpendiculaire à la face arrière. Alternativement ou en plus, au moins deux palettes disposées du côté d'un même bord peuvent être superposées suivant une direction parallèle à la face arrière et rejoignant les faces supérieures ou inférieures de la manette. Alternativement ou en plus, au moins deux palettes disposées du côté d'un même bord peuvent être superposées suivant une direction parallèle à la face arrière et rejoignant les faces latérales de la manette tenues par l'utilisateur.

Chacune des palettes peut être utilisée pour entrer une même commande. Alternativement, au moins deux palettes peuvent être utilisées pour entrer des commandes différentes entre elles

Avantageusement, le dispositif selon l'invention peut comprendre au moins deux palettes énantiomorphes entre-elles, ce qui permet une plus grande facilité d'accommodation et une plus grande ergonomie pour l'utilisateur.

Selon une caractéristique particulièrement avantageuse, le dispositif selon l'invention peut comprendre au moins deux, en particulier exactement deux, palettes réalisées d'un seul tenant, et en particulier en une seule pièce, et se rejoignant entre-elles au niveau de la partie de fixation.

Ainsi, le positionnement des palettes sur une manette est plus rapide, et plus facile.

De plus, lesdites au moins deux palettes, peuvent comprendre chacune une amincie pour fournir à chacune d'elle une mobilité/flexion par rapport à la face arrière, indépendamment l'une de l'autre. Alternativement, lesdites au moins deux palettes, peuvent comprendre chacune une pièce rigide elle-même mobile par rapport à la partie de fixation.

Avantageusement, ledit dispositif selon l'invention peut comprendre un moyen de fixation commun à au moins deux palettes.

Ainsi, la fixation du dispositif selon l'invention sur une manette est plus rapide, moins couteuse, et moins dangereuse pour la manette.

Le moyen de fixation peut être prévu pour être positionné au niveau d'une zone centrale de la face arrière de la manette par rapport aux bords latéraux de la manette, en particulier sensiblement à distance égale par rapport à chaque bord/face latéral(e) de la manette.

Alternativement ou en plus, le moyen de fixation peut être prévu pour être positionné au niveau d'une zone centrale de la face arrière de la manette par rapport aux surfaces supérieures et inférieures de la manette, en particulier sensiblement à distance égale par rapport aux surfaces supérieures et inférieures de la manette.

Chaque palette peut présenter les mêmes dimensions, en particulier la même largeur de sorte que, par exemple, pour chaque palette la partie de fixation est située entre les parties de manipulation en une position déterminée pour que, lors de sa fixation sur la face arrière d'une manette déterminée entre deux bords latéraux ou faces latérales de ladite manette, chaque partie de manipulation soit située à égale distance de l'un desdits bords latéraux ou faces latérales.

Au moins une, en particulier chaque palette, peut avantageusement présenter une extrémité libre de côté de la partie de manipulation.

Plus particulièrement, la partie de manipulation peut être formée, au moins en partie, par l'extrémité libre de la palette.

En particulier, pour au moins une, préférentiellement chaque, palette l'extrémité libre fuit la face arrière de la manette et se trouve en dehors du châssis de la manette.

Préférentiellement, au moins une, en particulier chaque, palette peut être recourbée de sorte que l'angle entre la partie de manipulation et la partie de fixation est variable le long d'une direction rejoignant une face supérieure et une face inférieure de la manette. Une telle direction est en particulier une direction perpendiculaire à la face supérieure et/ou à la face inférieure, ou une direction parallèle à la direction de préhension de la manette, c'est-à-dire une direction autour de laquelle la paume de la main se plie pour tenir la manette.

Une telle caractéristique permet de proposer un accès plus adapté et plus facile à la partie de manipulation pour chacun des doigts de la main autre que le pouce, permettant une entrée de commande aisée quel que soit le doigt de la main.

Préférentiellement, l'angle entre la partie de manipulation et la partie de fixation peut augmenter le long d'une telle direction, dans le sens allant de la face supérieure à la face inférieure. Ainsi, la partie de manipulation présente, par rapport à la partie de fixation (et la face arrière de la manette), un angle croissant en partant de l'index vers l'auriculaire. De cette façon, pour entre une commande, l'effort d'appui reste le même quelque soit le doigt utilisé.

Pour au moins une, en particulier chaque, palette, l'angle formé par la partie de manipulation et la partie de fixation, et en particulier la face arrière de la manette, peut être compris entre 10 et 90°, et préférentiellement entre 35° et 55°, encore plus préférentiellement de 40° et 50°. Cela permet d'entrer une commande suivant une direction inclinée par rapport à la face arrière de la manette, ce qui est naturellement plus adapté aux doigts d'une main tenant la manette par un bord latéral de la manette.

Suivant une caractéristique avantageuse, la partie de manipulation d'au moins une, en particulier de chaque, palette peut présenter une largeur variable, et en particulier croissante, le long d'une direction rejoignant une face supérieure et une face inférieure de la manette, et en particulier une largeur croissante dans le sens allant de la face supérieure vers la face inférieure. Une telle direction peut en particulier être une direction perpendiculaire à la face supérieure de la manette et/ou à la face inférieure de la manette, ou une direction parallèle à une direction de préhension de la manette c'est-à-dire une direction autour de laquelle la paume de la main se plie pour tenir la manette.

De cette manière, la partie de manipulation peut être accédée aisément par chacun des doigts de l'utilisateur (autre que le pouce). Généralement les doigts les plus courts d'une main sont l'annulaire et surtout l'auriculaire. Le fait que la largeur de la partie de manipulation soit variable et en particulier croissant en allant de l'index vers l'auriculaire permet un accès aisé à tous les doigts de la main (autre que le pouce).

En outre, la partie de manipulation d'au moins une, en particulier de chaque, palette peut comporter une hauteur déterminée pour être supérieure ou égale à la moitié de la hauteur de la face arrière d'une manette sur laquelle ledit dispositif est prévu pour être fixé, définie dans une direction rejoignant une face supérieure et une face inférieure de la manette qui sont séparées par ladite face arrière. Une telle direction peut en particulier être une direction perpendiculaire à la face supérieure de la manette et/ou à la face inférieure de la manette, ou une direction parallèle à une direction de préhension de la manette, c'est-à-dire une direction autour de laquelle la paume de la main se plie pour tenir la manette.

De cette manière, la palette reste accessible à chacun des doigts de la main autre que le pouce, quelle que soit la taille de la main de l'utilisateur ou son positionnement sur un bord latérale de la manette.

La partie de fixation d'au moins une, en particulier de chaque, palette peut présenter une hauteur croissante dans la direction dans laquelle ladite palette s'étend.

Ainsi, ladite palette présente une robustesse adaptée, en particulier du côté de la partie de manipulation sujette aux appuies de l'utilisateur, tout en optimisant la quantité de matière utilisée pour la fabriquer.

Suivant un exemple de réalisation particulièrement préférée, au moins une palette peut présenter une forme générale en aile de papillon avec la partie de fixation se trouvant du côté de la base de ladite aile de papillon et la partie de manipulation du côté de l'extrémité libre de ladite aile de papillon, ladite aile de papillon étant pliée entre ladite partie de fixation et ladite partie de manipulation.

Suivant un mode de réalisation particulier, au moins une, en particulier chaque, palette peut se présenter sous la forme d'une plaque, d'épaisseur négligeable, les parties de fixation et de manipulation se trouvant du côté de deux extrémités opposées de ladite plaque, ladite plaque étant recourbée entre lesdites extrémités autour d'une direction :
- parallèle au plan formé par ladite plaque, et
- perpendiculaire à une direction rejoignant lesdites extrémités opposées.

Le moyen de fixation d'au moins une, en particulier de chaque, palette peut être une surface de fixation prévue pour être collée à une face arrière ou tout autre moyen de fixation par collage, par clipsage, etc.

Préférentiellement, le moyen de fixation d'au moins une, en particulier de chaque, palette peut être une ouverture traversante prévue pour accueillir une vis venant se loger sur la face arrière de la manette.

Au moins une, en particulier chaque, palette peut être prévue pour venir actionner au moins un capteur binaire ou progressif disposé sur/dans la face arrière de la manette lorsque ladite palette est mise en rotation/flexion.

Alternativement ou en plus, chaque palette peut comporter sur/dans une face de ladite palette, et en regard de la face arrière de la manette, un ou plusieurs capteurs prévus pour être mis en contact avec la face arrière de ladite manette lorsque ladite palette est mise en rotation/flexion.

Suivant un autre aspect de l'invention, il est proposé une manette d'entrée de commande pour un appareil électronique/informatique, en particulier un appareil exécutant un jeu vidéo, comprenant au moins un dispositif d'entrée de commande selon l'une quelconque des revendications précédentes disposé sur sa face arrière.

Par exemple, le dispositif d'entrée de commande peut être fixé à mi-hauteur ou dans une moitié inférieure de la face arrière de ladite manette.

En outre, le dispositif d'entrée de commande peut être fixé à égale distance de chacun des bords latéraux de la manette.

Selon un mode de réalisation nullement limitatif, la manette selon l'invention peut être équipée d'un dispositif d'entrée de commande selon l'invention comprenant deux palettes, énantiomorphes entre-elles, présentant chacune une forme en aile de papillon, réalisées d'un seul tenant, et présentant un moyen de fixation commun, chaque palette :
- étant fixé à la face arrière de ladite manette au niveau d'une zone centrale de ladite face arrière, et
- s'étendant vers un bord latéral de ladite manette de sorte à présenter une extrémité libre du côté dudit bord latérale ;
de sorte que chaque palette est mise en rotation ou en flexion autour d'un axe rejoignant les faces supérieures et inférieures de ladite manette.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple d'une manette selon l'art antérieur ;
- les FIGURES 2a et 2b sont des représentations schématiques d'un premier exemple d'un dispositif d'entrée de commande selon l'invention ; et
- les FIGURES 3a à 3c sont des représentations schématiques d'un deuxième exemple d'un dispositif d'entrée de commande selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

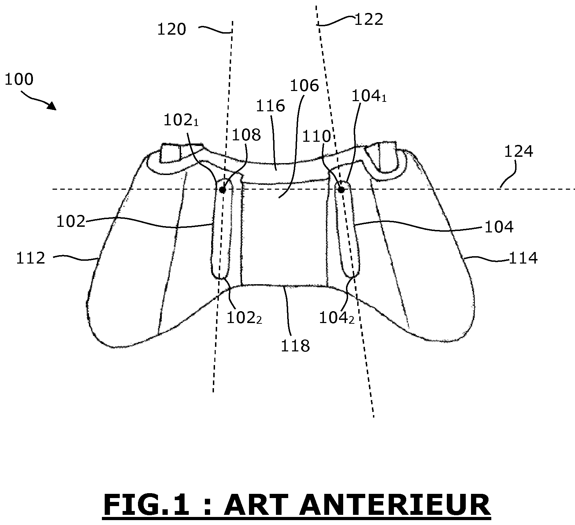

La FIGURE 1 est une représentation schématique d'un exemple d'une manette selon l'art antérieur comprenant deux palettes de commande.

La manette 100 représentée sur la FIGURE 1 comprend deux palettes de commandes 102 et 104 fixées sur une face arrière 106 de la manette à l'aide d'une vis de fixation, respectivement 108 et 110, du côté d'une face latérale, respectivement 112 et 114, de la manette 100.

Chaque palette 102, 104 se présente sous la forme d'une plaque plastique flexible de forme allongée et d'épaisseur négligeable. Chaque palette 102, 104 où est fixée par une de ses extrémités, respectivement 102₁ et 104₁, sur la face arrière 106 de la manette 100 du côté d'une face supérieure 116 de la manette 100 et se prolonge de manière rectiligne vers la face inférieure 118 de la manette 100 de sorte qu'elle présente une extrémité libre, respectivement 102₂ et 104₂, du côté de ladite face inférieure 118.

Chaque palette 102, 104 se prolonge donc suivant une direction, matérialisée respectivement par la droite référencée 120 et la droite référencée 122 sur la FIGURE 1, rejoignant la face supérieure 116 et la face inférieure 118. De plus chaque palette 102 et 104 est agencée sur la manette 100 de sorte que la surface d'appui de chaque palette 102, 104 est sensiblement parallèle à la face arrière 106 de la manette 100.

Dans l'exemple représenté sur la FIGURE 1, l'utilisateur peut entrer une commande en effectuant un appui sur chaque palette 102, 104 par les doigts d'une main autre que le pouce. Lorsque l'utilisateur appuie sur une palette 102,104, cette dernière est mise en rotation ou en flexion autour d'un axe, matérialisée par la droite 124.

Chacune de ses palettes présente plusieurs inconvénients majeurs. Premièrement, il n'est pas possible d'entrer une commande par un doigt se trouvant sur (ou à proximité) de l'extrémité de fixation, respectivement 102₁ et 104₁, de la palette. Autrement dit, il n'est pas possible d'entrer une commande sur toute la hauteur de la palette. Deuxièmement, l'effort à fournir pour mettre en flexion la palette est variable le long de la palette. Il augmente lorsqu'on s'approche de l'extrémité de fixation 102₁ et 104₁ et diminue lorsqu'on s'approche de l'extrémité libre 102₂ et 104₂. Enfin, la surface d'appui de chaque palette 102, 104 étant parallèle à la face arrière 106 de la manette 100, pour entrer une commande, l'appui doit être exercé suivant une direction perpendiculaire à la face arrière de la manette, ce qui n'est ni naturel ni ergonomique lorsque la manette est tenue par une main au niveau de chacun des bords 112 et 114 de la manette.

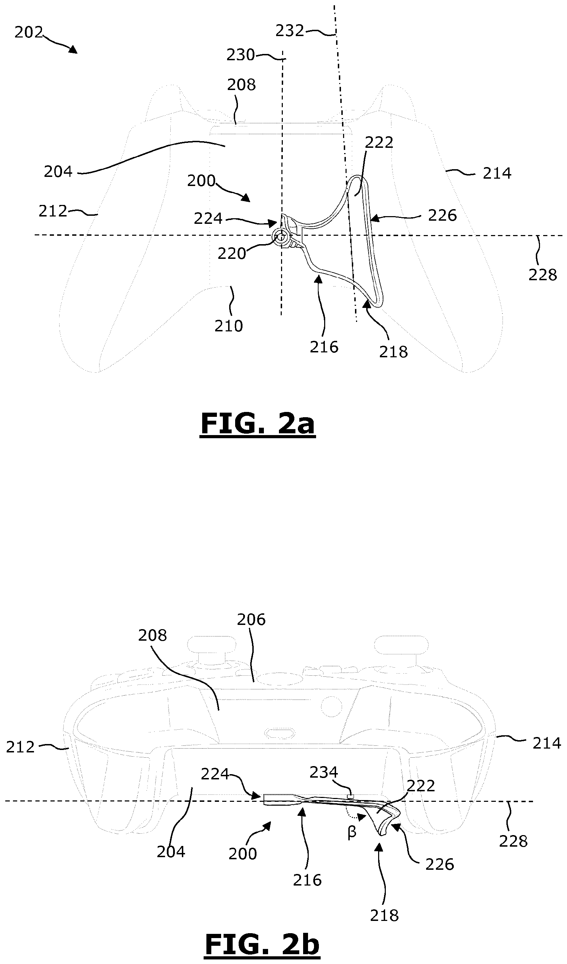

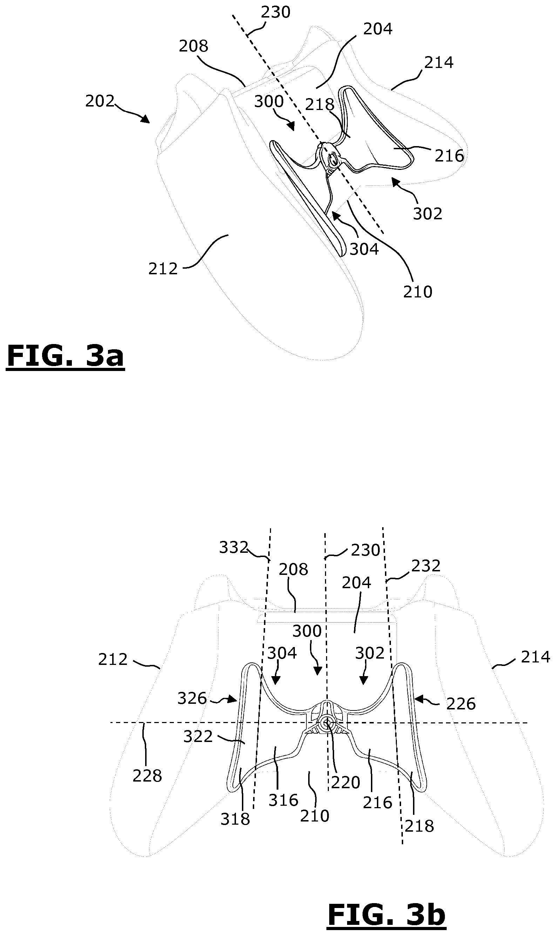

Pour remédier à ces inconvénients, la présente invention propose un dispositif d'entrée de commande pour manette de jeu, dont deux exemples non limitatifs vont être décrits dans la suite en référence aux FIGURES 2a-2b et FIGURES 3a et 3b.

Les FIGURES 2a et 2b sont des représentations schématiques d'un premier exemple de réalisation d'un dispositif d'entrée de commande selon l'invention.

Le dispositif d'entrée de commande 200 est représenté sur les FIGURES 2a et 2b ensemble avec une manette 202, et en particulier fixé sur la face arrière 204 de la manette 200 qui comporte en outre
- une face avant 206 dirigée vers l'utilisateur lors de l'utilisation de la manette et opposée à la face arrière 204,
- une face supérieure, ou « bord supérieur », 208 se trouvant entre la face avant et la face arrière, et dirigé vers le haut lors de l'utilisation de la manette,
- une face inférieure ou « bord inférieur » 210, se trouvant entre la face avant et la face arrière, et dirigée vers le bas lors de l'utilisation de la manette,
- deux faces latérales ou deux bords latéraux, respectivement 212 et 214, se trouvant entre la face avant et la face arrière, chacun sur un côté de la manette lors de l'utilisation de la manette et servant à la tenue de la manette par serrage dans la paume d'une main de l'utilisateur.

Le dispositif 200 est représenté sur la FIGURE 2a avec vue sur la face arrière 204 de la manette et sur la FIGURE 2b avec vue sur la face supérieure 208 de la manette.

Le dispositif 200 est représenté sur les FIGURE 2a et 2b consiste en une palette prévue pour être manipulée par les doigts d'une main se trouvant du côté du bord latéral 214 de la manette 202 et tenant la manette par ledit bord latéral 214.

Le dispositif 200 comprend une partie de fixation 216 et une partie de manipulation 218. La partie de fixation 216 comporte une ouverture de fixation 220 traversée par une vis (non représentée) pour fixer la palette 200 sur la face arrière 204 de la manette 202. La partie de manipulation 218 comporte une surface 222, dite d'appui, prévue pour recevoir l'appui d'un doigt de l'utilisateur.

La partie de fixation 216 se trouve du côté d'une extrémité 224 de la palette 200 comportant l'ouverture de fixation 220 et la partie de manipulation 218 se trouve au niveau d'une extrémité libre 226 de la palette se trouvant du côté du bord latéral 214 de la manette.

La palette 200 est fixée sur la face arrière 204 de la manette 202 de sorte que la partie de manipulation se trouve entre la partie de fixation 216 et le bord latéral 214 de la manette 202. Plus particulièrement, la palette 200 se prolonge suivant une direction, matérialisée par la droite référencée 228, rejoignant les bords latéraux 212 et 214 de la manette.

Selon l'invention et indépendamment des exemples donnés, cette direction 228 peut être parallèle à la face supérieure 208 de la manette ou peut présenter un angle inférieure ou égale à 45° par rapport à la dite face supérieure 208.

La palette 200 est mise en rotation ou en flexion autour d'un axe, matérialisée par la droite 230, rejoignant les faces supérieure 208 et inférieure 210 de la manette. Cette direction 230 est en particulier perpendiculaire à la face supérieure 208, et/ou à la face inférieure 210 de la manette 202.

Selon l'invention, et indépendamment des exemples donnés, cette direction 230 peut en particulier être sensiblement parallèle, à quelques degrés près, à la direction de préhension de la manette par le bord 214 ou présenter un plus petit angle supérieur ou égal à 45° par rapport à la face supérieure 208.

De plus, la palette 200 est recourbée suivant une direction, matérialisée par la droite 232, rejoignant les faces supérieure 208 et inférieure 210 de la manette, de sorte que la partie de manipulation 218, et en particulier la surface d'appui 222, forme un angle β non nul par rapport à la partie de fixation 216, et en particulier par rapport à la face arrière 204 de la manette 202, et s'éloigne de la face arrière 204 de la manette 202. Cet angle β est préférentiellement compris entre 35 et 55°. Dans l'exemple représenté sur les FIGURES l'angle β est variable et augmente le long de la direction 232 vers la face inférieure 210 de la manette 202.

Selon l'invention, et indépendamment des exemples donnés, la direction 232 peut en particulier être sensiblement parallèle, à quelques degrés près, à la direction de préhension de la manette par le bord 214 ou présenter un plus petit angle supérieur ou égal à 45° par rapport à la face supérieure 208.

Dans l'exemple représenté, la palette 200 est réalisée en une pièce plastique flexible et élastique, sensiblement plate de sorte que son épaisseur est négligeable et pliée suivant l'axe 232.

La hauteur de la palette 200, mesurée suivant la direction 230, augmente le long de la direction 228 dans laquelle la palette se prolonge de sorte que la palette présente une hauteur du côté de son extrémité libre 226 plus grande comparée à sa hauteur du côté de son extrémité fixe 224.

La largeur de la partie de manipulation 218, et en particulier de la surface d'appui 222, mesurée suivant la direction 228 dans laquelle la palette se prolonge, augmente vers la face inférieure 210 de la manette 202 le long de la direction 230 autour de laquelle la palette 200 est mise en flexion (et/ou le long de la direction 230 suivant laquelle la palette est recourbée ou pliée) de sorte que la partie de manipulation 218, et en particulier la surface d'appui 222, présente une largeur du côté de la face inférieure 210 de la manette 202 plus grande à sa largeur du côté la surface supérieure 208 de la manette 202.

La palette 200 représentée sur les FIGURES 2a et 2b présente une forme générale en aile de papillon recourbée ou pliée, avec la partie de fixation 216 du côté de la base de ladite aile et la partie de manipulation du côté opposé.

La palette 200 est associée à un capteur 234, agencé dans la face arrière 204 de la manette 202 sous la palette 200 et en particulier sous la partie de fixation 216 de la manette. Lorsque l'utilisateur effectue un appui sur la partie de manipulation 218, et en particulier sur la surface d'appui 222, de la palette 200, cette dernière est mise en flexion et vient au contact et en appui sur le capteur 234 de sorte que l'appui réalisé par l'utilisateur est détecté. Lorsque l'utilisateur cesse d'appuyer sur la palette cette dernière reprend sa position de repos de manière élastique et n'est plus en contact avec le capteur 234.

Dans l'exemple non limitatif représenté sur les FIGURES 2a et 2b, le dispositif 200 comporte uniquement une seule palette. Bien entendu le dispositif selon l'invention peut comporter plusieurs palettes, de formes identiques ou différentes et/ou de dimensions identiques ou différentes. Le dispositif peut comprendre une ou plusieurs palettes disposées du côté d'un même bord latéral de la manette ou distribuées sur les deux bords latéraux de la manette et superposées dans le plan de la face arrière de la manette ou dans une direction verticale à ladite face arrière.

Les FIGURES 3a à 3c sont des représentations schématiques d'un exemple de réalisation préféré, mais nullement limitatif, du dispositif selon l'invention comprend deux palettes de commande.

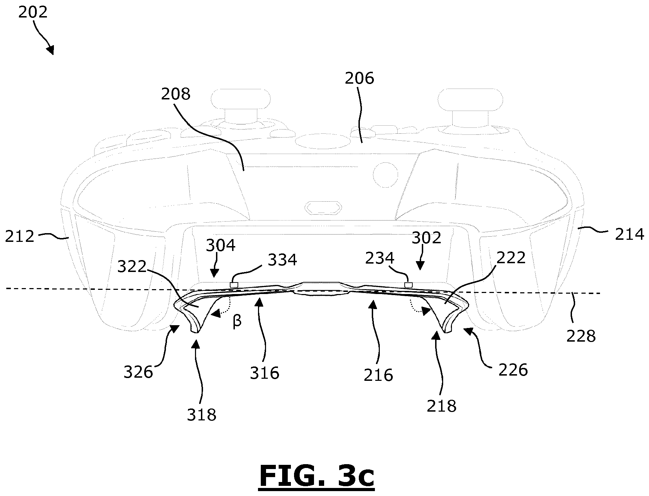

Le dispositif 300 est représenté sur les FIGURES 3a-3c avec la manette 202 des FIGURES 2a et 2b. Le dispositif 300 est représenté la FIGURE 3a avec vue de biais sur le bord latéral 212 de la manette, sur la FIGURE 3b avec vue sur la face arrière 204 de la manette et sur la FIGURE 3c avec vue sur la face supérieure 208 de la manette.

Le dispositif 300 comprend deux palettes 302 et 304, chacune du côté d'un bord latéral respectivement 214 et 212, de la manette 202.

La palette 302 est identique à la palette 200 des FIGURES 2a et 2b décrites ci-dessus.

La palette 304 présente une forme, des dimensions et un positionnement tels qu'elle est énantiomorphe avec la palette 302, et donc la palette 200, par rapport à l'axe 230. Autrement dit, toute la description qui a été faite de la palette 200 des FIGURES 2a et 2b peut être appliquée à la palette 304 en appliquant une symétrie par rapport à l'axe 230.

En résumé, la palette 304 se prolonge vers le bord latéral 212 suivant la direction 228. Elle comporte une partie de manipulation 318, pourvue d'une surface d'appui 322, et une partie de fixation 316 recourbée entre elles, autour d'une direction 332 de sorte que la partie de manipulation 318 forme un angle β non nul par rapport à la partie de fixation 316, et en particulier par rapport à la face arrière 204, de la manette 202. La partie de manipulation 318 se trouve entre la partie de fixation 316 et le bord latéral 212 de la manette 202. Elle peut être mise en flexion par rapport à l'axe 230 décrit plus haut. Elle est associée à un capteur 334, similaire ou identique au capteur 234 associé à la palette 200 décrite plus haut, positionné sous la palette 304 dans ou sur la face arrière 204 de la manette 202. Elle comporte une extrémité libre 326 du côté du bord latéral 212 de la manette 202.

Les palettes 302 et 304 comportent un moyen de fixation commun, à savoir l'ouverture de fixation 220, par rapport auquel chacune des palettes est flexible indépendamment de l'autre.

Cette ouverture de fixation est positionnée à égale distance de chacun des bords latéraux 212 et 214 de la manette 202 et dans la moitié inférieure de la face arrière 204, c'est-à-dire dans la moitié de la face arrière 204 du côté de la face inférieure 210 de la manette 202.

Le dispositif 300 est fabriqué d'un seul tenant par moulage ou par pliage d'une pièce plastique qui initialement est sensiblement plane. Elle présente une épaisseur négligeable par rapport à sa hauteur maximale et à sa largeur.

Bien entendu l'invention n'est pas limitée aux exemples qui viennent d'être décrits.

## Revendications

1. Dispositif (200;300) d'entrée de commande pour manette de jeu (202), prévu pour être disposé sur une face arrière (204) de ladite manette de jeu (202), ledit dispositif (200;300) comprenant au moins un actionneur (200;302,304), dit palette, comprenant :
- une partie (216,316), dite de fixation, prévue pour être fixée sur ladite face arrière (204), et
- une partie (218,318), dite de manipulation, présentant une surface d'appui (222,322) prévue pour être manipulée par au moins un doigt d'un utilisateur autre que le pouce ;
ladite palette (200;302,304) présente une géométrie telle que, lorsqu'elle est fixée sur ladite face arrière (204) ladite partie de manipulation (218,318) est positionnée entre ladite partie de fixation (216,316) et un bord latéral (214,212) de ladite manette (202) ;
**caractérisé en ce que** ladite palette (200;302,304) est recourbée entre ladite partie de fixation (216,316) et ladite partie de manipulation (218,318) de sorte que, lorsqu'elle est fixée sur ladite face arrière (204) :
- ladite palette (200;302,304) s'éloigne de ladite face arrière (204) du côté de ladite partie manipulation (218,318) ; et
- ladite partie de manipulation forme un angle non nul par rapport à ladite face arrière

2. Dispositif (300) selon la revendication 1, **caractérisé en ce qu'**il comprend au moins deux palettes (302,304) énantiomorphes entre-elles.

3. Dispositif (300) selon l'une quelconque des revendications précédentes, **caractérisé en ce qu'**il comprend au moins deux, en particulier exactement deux, palettes (302,304) réalisées d'un seul tenant, et en particulier en une seule pièce, et se rejoignant entre-elles au niveau de la partie de fixation (216,316).

4. Dispositif (300) selon la revendication précédente, **caractérisé en ce qu'**il comprend en outre un moyen de fixation (220) commun à au moins deux palettes (302,304).

5. Dispositif (200;300) selon l'une quelconque des revendications précédentes, **caractérisé en ce qu'**au moins une, en particulier chaque palette (200;302,304), présente une extrémité libre (226,326) de côté de la partie de manipulation (218,318).

6. Dispositif (200;300) selon l'une quelconque des revendications précédentes, **caractérisé en ce qu'**au moins une, en particulier chaque, palette (200;302,304) est recourbée de sorte que l'angle (β) entre la partie de manipulation (218,318) et la partie de fixation (216,316) est variable le long d'une direction (230,232,332) rejoignant une face supérieure (208) et une face inférieure (210) de la manette (202).

7. Dispositif (200;300) selon l'une quelconque des revendications précédentes, **caractérisé en ce que** l'angle (β) formé par la partie de manipulation (218,318) et la partie de fixation (216,316) est compris entre 10 et 90°, et préférentiellement entre 35° et 55°.

8. Dispositif (200;300) selon l'une quelconque des revendications précédentes, **caractérisé en ce que** la partie de manipulation (218,318) d'au moins une, en particulier de chaque, palette (200;302,304) présente une largeur croissante le long d'une direction (230,232,332) rejoignant une face supérieure (208)et une face inférieure (210) de la manette (202).

9. Dispositif (200,300) selon l'une quelconque des revendications précédentes, **caractérisé en ce que** la partie de manipulation (218,318) d'au moins une, en particulier de chaque, palette (200;302,304) peut comporter une hauteur déterminée pour être supérieure ou égale à la moitié de la hauteur de la face arrière (204) d'une manette (202) sur laquelle ledit dispositif (200;300) est prévu pour être fixé, définie dans une direction (230,232,332) rejoignant une face supérieure (208) et une face inférieure (210) de la manette (202) qui sont séparées par ladite face arrière (204).

10. Dispositif (200;300) selon l'une quelconque des revendications précédentes, **caractérisé en ce que** la partie de fixation (216,316) d'au moins une, en particulier de chaque, palette (200;302,304) présente une hauteur croissante dans la direction (228) dans laquelle ladite palette (200;302,304) s'étend.

11. Dispositif (200;300) selon l'une quelconque des revendications précédentes, **caractérisé en ce qu'**au moins une palette (200;302,304) présente une forme générale en aile de papillon avec la partie de fixation (216,316) se trouvant du côté de la base de ladite aile et la partie de manipulation (218,318) du côté de l'extrémité libre (226) de ladite aile, ladite aile étant pliée entre la partie de fixation (216,316) et la partie de manipulation (218,318).

12. Dispositif (200;300) selon l'une quelconque des revendications précédentes, **caractérisé en ce qu'**au moins une, en particulier chaque palette (200;302,304) se présente sous la forme d'une plaque, d'épaisseur négligeable, les parties de fixation (216,316) et de manipulation (218,318) se trouvant du côté de deux extrémités (224,226,326) opposées de ladite plaque, ladite plaque étant recourbée entre lesdites extrémités autour d'une direction (232, 332) :
- parallèle au plan formé par ladite plaque, et
- perpendiculaire à une direction (228) rejoignant lesdites extrémités opposées.

13. Manette (202) d'entrée de commande pour un appareil électronique/informatique, en particulier un appareil exécutant un jeu vidéo, comprenant au moins un dispositif (200,300) d'entrée de commande selon l'une quelconque des revendications précédentes disposé sur sa face arrière (204).

14. Manette (202) selon la revendication précédente, **caractérisée en ce que** le dispositif d'entrée de commande (200,300) est fixé à mi-hauteur ou dans une moitié inférieure de la face arrière (204) de ladite manette (202).

15. Manette (202) selon la revendication précédente, **caractérisée en ce que** le dispositif d'entrée de commande (300) comprend deux palettes (302,304), énantiomorphes entre-elles, présentant chacune une forme en aile de papillon, réalisées d'un seul tenant, et présentant un moyen de fixation commun (220), chaque palette (302,304) :
- étant fixée à la face arrière (204) de ladite manette au niveau d'une zone centrale de ladite face arrière (204), et
- s'étendant vers un bord latéral (212,214) de ladite manette (202) de sorte à présenter une extrémité libre (226, 326) du côté dudit bord latéral (214,212) ;
de sorte que chaque palette (302,304) est mise en rotation ou en flexion autour d'un axe (230) rejoignant les faces supérieures (208) et inférieures (210) de ladite manette (202).

## Patentansprüche

1. Befehlseingabevorrichtung (200; 300) für Joysticks (202), die dazu vorgesehen ist, an einer Rückseite (204) des Joysticks (202) angeordnet zu werden, wobei die Vorrichtung (200; 300) zumindest einen Aktuator (200; 302, 304), Steg genannt, aufweist, enthaltend:
- ein Teil (216, 316), Befestigungsteil genannt, das dazu vorgesehen ist, an die Rückseite (204) befestigt zu werden, und
- ein Teil (218, 318), Handhabungsteil genannt, das eine Auflagefläche (222, 322) aufweist, die dazu vorgesehen ist, von zumindest einem anderen Finger eines Benutzers als der Daumen betätigt zu werden;
wobei der Steg (200; 302, 304) eine solche Geometrie aufweist, dass dann, wenn er an der Rückseite (204) befestigt ist, das Handhabungsteil (218, 318) zwischen dem Befestigungsteil (216, 316) und einem Seitenrand (214, 212) des Joysticks (202) positioniert ist;
**dadurch gekennzeichnet, dass**
der Steg (200; 302, 304) zwischen dem Befestigungsteil (216, 316) und dem Handhabungsteil (218, 318) gekrümmt verläuft, so dass dann, wenn er an die Rückseite (204) befestigt ist,
- der Steg (200; 320, 304) sich auf der Seite des Handhabungsteils (218, 318) von der Rückseite (204) entfernt; und
- das Handhabungsteil einen Winkel ungleich null mit der Rückseite einschließt.

2. Vorrichtung (300) nach Anspruch 1,
**dadurch gekennzeichnet, dass**
sie zumindest zwei Stege (302, 304) aufweist, die spiegelsymmetrisch zueinander sind.

3. Vorrichtung (300) nach einem der vorangehenden Ansprüche,
**dadurch gekennzeichnet, dass**
sie zumindest zwei, insbesondere genau zwei, Stege (302, 304) enthält, die einteilig und insbesondere einstückig ausgebildet sind und im Bereich des Befestigungsteils (216, 316) miteinander verbunden sind.

4. Vorrichtung (300) nach dem vorangehenden Anspruch,
**dadurch gekennzeichnet, dass**
sie ferner eine Befestigungseinrichtung (220) enthält, die zumindest zwei Stegen (302, 304) gemein ist.

5. Vorrichtung (200; 300) nach einem der vorangehenden Ansprüche,
**dadurch gekennzeichnet, dass**
zumindest ein, insbesondere jeder, Steg (200; 302, 304) auf der Seite des Handhabungsteils (218, 318) ein freies Ende (226, 326) aufweist.

6. Vorrichtung (200; 300) nach einem der vorangehenden Ansprüche,
**dadurch gekennzeichnet, dass**
zumindest ein, insbesondere jeder, Steg (200; 302, 304) gekrümmt verläuft, so dass der Winkel (β) zwischen dem Handhabungsteil (218, 318) und dem Befestigungsteil (216, 316) entlang einer Richtung (230, 232, 332) veränderlich ist, die eine Oberseite (208) und eine Unterseite (210) des Joysticks (202) verbindet.

7. Vorrichtung (200; 300) nach einem der vorangehenden Ansprüche,
**dadurch gekennzeichnet, dass**
der von dem Handhabungsteil (218, 318) und dem Befestigungsteil (216, 316) eingeschlossene Winkel (β) zwischen 10 und 90°, vorzugsweise zwischen 35° und 55°, liegt.

8. Vorrichtung (200; 300) nach einem der vorangehenden Ansprüche,
**dadurch gekennzeichnet, dass**
das Handhabungsteil (218, 318) zumindest eines, insbesondere jedes, Stegs (200; 302, 304) entlang einer Richtung (230, 232, 332), die eine Oberseite (208) und eine Unterseite (210) des Joysticks (202) verbindet, in der Breite zunimmt.

9. Vorrichtung (200, 300) nach einem der vorangehenden Ansprüche,
**dadurch gekennzeichnet, dass**
das Handhabungsteil (218, 318) zumindest eines, insbesondere jedes, Stegs (200; 302, 304) eine Höhe aufweisen kann, die so bestimmt ist, dass sie größer oder gleich der halben Höhe der Rückseite (204) eines Joysticks (202) ist, an welcher die Vorrichtung (200; 300) befestigt werden soll, die in einer Richtung (230, 232, 332) definiert ist, die eine Oberseite (208) und eine Unterseite (210) des Joysticks (202) verbindet, die durch die Rückseite (204) getrennt sind.

10. Vorrichtung (200; 300) nach einem der vorangehenden Ansprüche,
**dadurch gekennzeichnet, dass**
das Befestigungsteil (216, 316) zumindest eines, insbesondere jedes, Stegs (200; 302, 304) eine Höhe aufweist, die in der Richtung (228) zunimmt, in der sich der Steg (200; 302, 304) erstreckt.

11. Vorrichtung (200; 300) nach einem der vorangehenden Ansprüche,
**dadurch gekennzeichnet, dass**
zumindest ein Steg (200; 302, 304) die Form eines Schmetterlingsflügels aufweist, wobei das Befestigungsteil (216, 316) sich auf der Seite der Basis des Flügels befindet und das Handhabungsteil (218, 318) sich auf der Seite des freien Endes (226) des Flügels befindet, wobei der Flügel zwischen dem Befestigungsteil (216, 316) und dem Handhabungsteil (218, 318) gefaltet ist.

12. Vorrichtung (200; 300) nach einem der vorangehenden Ansprüche,
**dadurch gekennzeichnet, dass**
zumindest ein, insbesondere jeder, Steg (200; 302, 304) in Form einer Platte mit vernachlässigbarer Dicke vorliegt, wobei das Befestigungs- (216, 316) und das Handhabungsteil (218, 318) auf der Seite von zwei entgegengesetzten Enden (224, 226, 326) der Platte liegen, wobei die Platte zwischen den Enden um eine Richtung (232, 332) gekrümmt verläuft, die
- parallel zur von der Platte gebildeten Ebene verläuft und
- senkrecht zu einer Richtung (228) verläuft, welche die entgegengesetzten Enden verbindet.

13. Joystick (202) zur Befehlseingabe für ein Elektronik/IT-Gerät, insbesondere ein Gerät, auf dem ein Videospiel abläuft, enthaltend zumindest eine Befehlseingabevorrichtung (200, 300) nach einem der vorangehenden Ansprüche, die an seiner Rückseite (204) angeordnet ist.

14. Joystick (202) nach dem vorangehenden Anspruch,
**dadurch gekennzeichnet, dass**
die Befehlseingabevorrichtung (200, 300) auf halber Höhe oder in einer unteren Hälfte der Rückseite (204) des Joysticks (202) befestigt ist.

15. Joystick (202) nach dem vorangehenden Anspruch,
**dadurch gekennzeichnet, dass**
die Befehlseingabevorrichtung (300) zwei spiegelsymmetrisch zueinander ausgeführte Stege (302, 304) aufweist, die jeweils eine Schmetterlingsflügelform aufweisen, einteilig ausgebildet sind und eine gemeinsame Befestigungseinrichtung (220) aufweisen, wobei jeder Steg (302, 304)
- an die Rückseite (204) des Joysticks an einem Mittelbereich der Rückseite (204) befestigt ist und
- sich zu einem Seitenrand (212, 214) des Joysticks (202) hin so erstreckt, dass er ein freies Ende (226, 326) auf der Seite des Seitenrandes (214, 212) aufweist;
so dass jeder Steg (302, 304) um eine Achse (230) gedreht bzw. umgebogen wird, welche die Oberseite (208) und die Unterseite (210) des Joysticks (202) verbindet.

## Claims

1. A command input device (200;300) for a game pad (202) provided to be arranged on a rear face (204) of said game pad (202), said device (200;300) comprising at least one actuator (200;302,304), called paddle, comprising:
- a part (216,316), called fixing part, provided to be fixed on said rear face (204), and
- a part (218,318), called manipulation part, having a contact surface (222,322) provided to be manipulated by at least one finger of a user apart from the thumb;
said paddle (200;302,304) has a geometry such that, when it is fixed on said rear face (204), said manipulation part (218,318) is positioned between said fixing part (216,316) and a lateral edge (214,212) of said game pad (202) ;
**characterized in that** said paddle (200;302,304) is curved between said fixing part (216,316) and said manipulation part (218,318) so that, when it is fixed on said rear face (204):
- said paddle (200;302,304) becomes further away from said rear face (204) on the side of said manipulation part (218, 318); and
- said manipulation part forms a non-zero angle with respect to said rear face.

2. The device (300) according to claim 1, **characterized in that** it comprises at least two paddles (302,304) that are enantiomorph of each other.

3. The device (300) according to any one of the preceding claims, **characterized in that** it comprises at least two, in particular exactly two, one-block paddles (302, 304), in particular formed in a single piece, joining together at the fixing part (216,316).

4. The device (300) according to the preceding claim, **characterized in that** it comprises a fixing means (220) common to at least two paddles (302,304).

5. The device (200; 300) according to any one of the preceding claims, **characterized in that** at least one, in particular each, paddle (200; 302, 304) has a free end (226, 326) on the side of the manipulation part (218, 318).

6. The device (200; 300) according to any one of the preceding claims, **characterized in that** at least one, in particular each, paddle (200; 302, 304) is curved so that the angle (β) between the manipulation part (218, 318) and the fixing part (216, 316) varies along a direction (230, 232, 332) joining an upper face (208) and a lower face (210) of the game pad (202).

7. The device (200; 300) according to any one of the preceding claims, **characterized in that** the angle (β) formed between the manipulation part (218, 318) and the fixing part (216, 316) is comprised between 10° and 90°, and preferentially between 35° and 55°.

8. The device (200; 300) according to any one of the preceding claims, **characterized in that** the manipulation part (218, 318) of at least one, in particular each, paddle (200; 302, 304) has a width that increases along a direction (230, 232, 332) joining an upper face (208) and a lower face (210) of the game pad (202).

9. The device (200, 300) according to any one of the preceding claims, **characterized in that** the manipulation part (218, 318) of at least one, in particular each, paddle (200; 302, 304) has a height determined so that it is greater than or equal to half the height of the rear face (204) of a game pad (202) on which it is intended to fix said device (200; 300), defined in a direction (230, 232, 332) joining an upper face (208) and a lower face (210) of the game pad (202) that are separated by said rear face (204).

10. The device (200; 300) according to any one of the preceding claims, **characterized in that** the fixing part (216, 316) of at least one, in particular each, paddle (200; 302, 304) has a height that increases in the direction (228) in which said paddle (200; 302, 304) extends.

11. The device (200; 300) according to any one of the preceding claims, **characterized in that** at least one paddle (200; 302, 304) has the general shape of a butterfly wing with the fixing part (216, 316) located on the side of the base of said butterfly wing and the manipulation part (218, 318) on the side of the free end (226) of said wing, said wing being folded between the fixing part (216, 316) and the manipulation part (218, 318).

12. The device (200; 300) according to any one of the preceding claims, **characterized in that** at least one, in particular each, paddle (200; 302, 304) is presented in the form of a plate, of insignificant thickness, the fixing (216, 316) and manipulation (218, 318) parts being located on the side of two opposite ends (224, 226, 326) of said plate, said plate being curved between said ends about a direction (232, 332):
- parallel to the plane formed by said plate, and
- perpendicular to a direction (228) joining said opposite ends.

13. A command input game pad (202) for an electronic or computer device, in particular a device executing a video game, comprising at least one command input device (200,300) according to any one of the preceding claims arranged on its rear face (204).

14. The game pad (202) according to the preceding claim, **characterized in that** the command input device (200,300) is fixed at mid-height or in a lower half of the rear face (204) of said game pad (202).

15. The game pad (202) according to the preceding claim, **characterized in that** the command input device (300) comprises two paddles (302, 304), mirror images of one another, each having a butterfly wing shape, produced in a single piece and having a common fixing means (220), each paddle (302, 304):
- being fixed to the rear face (204) of said game pad at a central area of said rear face (204), and
- extending to a lateral edge (212, 214) of said game pad (202) so as to present a free end (226, 326) on the side of said lateral edge (214, 212);
so that each paddle (302, 304) is rotated or flexed about an axis (230) joining the upper (208) and lower (210) faces of said game pad (202).
